# EUROPEAN PATENT APPLICATION

(11) **EP 4 411 033 A1**
(43) Date of publication of application: **07.08.2024**
(21) Application number: 22875101.2
(22) Date of filing: 29.09.2022
(51) Int. Cl.: D01D 1/04, B29C 48/76, B29C 45/63

(54) **SCREW EXTRUDER, AND FIBER SPINNING, DRAFTING AND WINDING COMBINED MACHINE FOR POLYLACTIC ACID INDUSTRY**

(30) Priority: 30.09.2021 CN 202111163903; 30.09.2021 CN 202122407182 U
(71) Applicant: Beijing Chonglee Machinery Engineering Co., Ltd., Beijing 101111 (CN)
(72) Inventor: MAN, Xiaodong, Beijing 101111 (CN); MAO, Yubo, Beijing 101111 (CN); QIU, Junxian, Beijing 101111 (CN); XU, Kai, Beijing 101111 (CN); LI, Yadi, Beijing 101111 (CN); REN, Yuguo, Beijing 101111 (CN); HOU, Bo, Beijing 101111 (CN); LIU, Kailiang, Beijing 101111 (CN); BAI, Xue, Beijing 101111 (CN); ZHANG, Baocheng, Beijing 101111 (CN)
(74) Representative: Sach, Greg Robert
(86) International application number: PCT/CN2022/122718
(87) International publication number: WO 2023/051720

(57) **Abstract**

Disclosed are a screw extruder and a combined spinning-drawing-winding machine for industrial polylactic-acid fiber. The screw extruder includes a threaded sleeve (1-a) and a threaded rod (1-b) penetrating in the threaded sleeve (1-a). The threaded rod (1-b) includes a feed section (1-5d), a compression section and a metering section (1-5a). The threaded sleeve (1-a) includes a gas collection chamber (1-3g) and an exhaust hole (1-3d). The gas collection chamber (1-3g) is opened and disposed on an inner wall of a junction of the compression section and the metering section (1-5), A gas is collected through the gas collection chamber (1-3g). The gas generated by a hydrolysis is discharged from the exhaust hole (1-3d) by controlling an on-off valve (1-3). When the melt enters the metering section (1-5a), the gas is removed in time, thereby overcoming the serious adverse impact of the gas from the hydrolysis on the spinning. The unfavorable situation of end breakage is eliminated, and a subsequent spinning quality and a spinning efficiency are guaranteed.

## Description

### CROSS-REFERENCE TO RELATED APPLICATIONS

This application claims priorities of Chinese Patent Application No. 202111163903.8, filed on September 30, 2021 and entitled "Screw extruder and combined spinning-drawing-winding machine for industrial polylactic-acid fiber", and Chinese Patent Application No. 202122407182.2, filed on September 30, 2021 and entitled "Screw extruder and combined spinning-drawing-winding machine for industrial polylactic-acid fiber", all of which are hereby incorporated by reference in their entireties.

### TECHNICAL FIELD

The disclosure relates to a screw extruder and a combined spinning-drawing-winding machine for industrial polylactic-acid fiber.

### BACKGROUND

Most of the existing spinning-drawing-winding apparatuses for industrial polylactic-acid fiber filament are modified from other types of apparatuses and have a biggest disadvantage that the product quality and performance are unstable. Due to an instability of bio-based polylactic-acid raw material, slices of the bio-based polylactic-acid raw material will be hydrolyzed during a melting process, and gases and weak acid corrosive substances are generated. In particular, the generated gases will have a serious impact on subsequent spinning, most obviously there will be a large number of end breakage which needs to be eliminated urgently.

### SUMMARY

Based on the above problems, the present disclosure provides a screw extruder and a combined spinning-drawing-winding machine for industrial polylactic-acid fiber.

In one aspect of the disclosure, a screw extruder is provided, including a threaded sleeve and a threaded rod penetrating in the threaded sleeve. The threaded rod includes a feed section, a compression section and a metering section which are disposed in sequence. The threaded sleeve includes a gas collection chamber and an exhaust hole. The gas collection chamber is opened and disposed on an inner wall of a junction of the compression section and the metering section. The exhaust hole is in communication with the gas collection chamber. In some embodiments, the threaded sleeve is equipped with an on-off valve to open and close the exhaust hole.

In another aspect of the disclosure, a combined spinning-drawing-winding machine for industrial polylactic-acid fiber is provided, including the above-mentioned screw extruder, an extrusion head disposed at a head portion of the screw extruder being disposed with a melt pressure sensor.

The disclosure provides a screw extruder, including a threaded sleeve and a threaded rod penetrating in the threaded sleeve. The threaded sleeve is disposed with an external heater at outside to provide heat. The threaded rod includes: the feed section, the compression section and the metering section which are disposed in sequence. A polylactic-acid raw material when entering the feed section, changes gradually from a solid material into a molten melt with an increase of a temperature step by step and under an action of shear heat between raw materials. In the compression section, the solid material is fully melted to a liquid phase by compression and shear, and therefore the raw material in liquid phase will be hydrolyzed during a melting process and gases generated will have a serious impact on subsequent spinning. The gas is collected through the gas collection chamber located at an end of the compression section. The gas generated by the hydrolysis is discharged from the exhaust hole by controlling the on-off valve. When the melt enters the metering section, the gas is removed in time, thereby overcoming the serious adverse impact of the gas from the hydrolysis on the spinning. The unfavorable situation of end breakage is eliminated, and a subsequent spinning quality and a spinning efficiency are guaranteed.

### BRIEF DESCRIPTION OF DRAWINGS

FIG. 1 is a schematic diagram of an overall structure of a screw extruder according to Embodiment One of the disclosure;
FIG. 2 is a partial structural diagram of a portion indicated by A in FIG. 1;
FIG. 3 is a schematic comparison of the cross-sections taken along G1-G1, G2-G2, and G3-G3 in FIG. 2;
FIG. 4 is a partial enlarged diagram of a portion indicated by B in FIG. 1;
FIG. 5 is a schematic diagram of another embodiment with respect to a solution shown in FIG. 4;
FIG. 6 is a schematic diagram of another embodiment with respect to solutions shown in FIG. 4 and FIG. 5;
FIG. 7 is a partial enlarged diagram of a portion indicated by C in FIG. 1;
FIG. 8 is a partial enlarged diagram of a portion indicated by D in FIG. 1; and
FIG. 9 is an enlarged cross sectional view taken along E-E in FIG. 1.

Reference signs: 1-a, threaded sleeve; 1-b, threaded rod; 1-c, base seat; 1-1, first threaded sleeve; 1-2, electric contact pressure gauge; 1-3, on-off valve; 1-3a, valve stem; 1-3b, valve body; 1-3c, packing sealer; 1-3d, exhaust hole; 1-3e, bushing; 1-3f, sealing gasket; 1-3g, gas collection chamber; 1-3h, electric vacuum pump; 1-3i, manual needle valve; 1-3j, electric needle valve; 1-4, second threaded sleeve; 1-5a, metering section; 1-5a1, second double-thread structure; 1-5a2, diamond shape separated structure; 1-5a3, first double-thread structure; 1-5a3-1~1-5a3-4, V-shaped groove; 1-5b, second compression section; 1-5c, first compression section; 1-5d, feed section.

### DESCRIPTION OF EMBODIMENTS

### Embodiment One

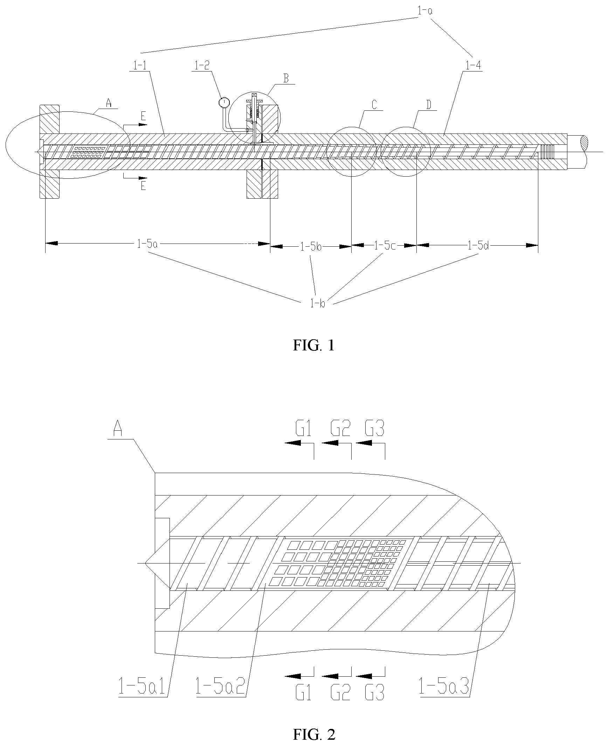

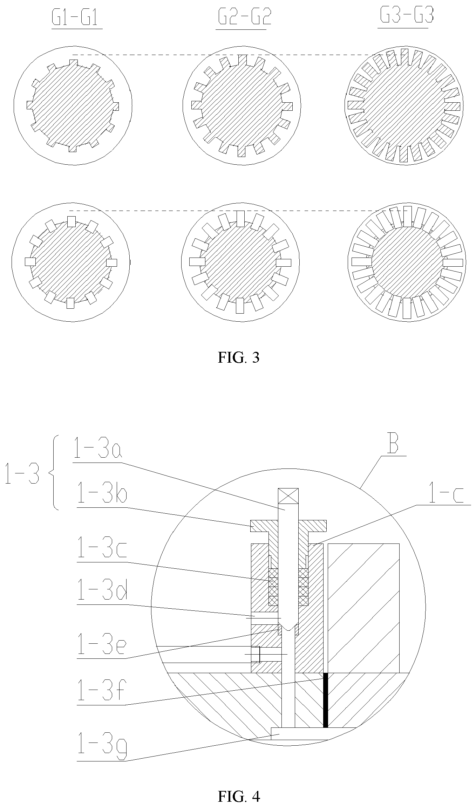

Referring to FIG. 1 and FIG. 4, according to this embodiment, a screw extruder is provided, including a threaded sleeve 1-a and a threaded rod 1-b penetrating in the threaded sleeve 1-a. The threaded rod 1-b may include a feed section 1-5d, a compression section (represented as a first compression section 1-5c and a second compression section 1-5b as shown in FIG. 1, and also represented in other forms) and a metering section 1-5a which are disposed in sequence. The threaded sleeve 1-a includes a gas collection chamber 1-3g and an exhaust hole 1-3d. The gas collection chamber 1-3g is opened and disposed on an inner wall of a junction of the compression section and the metering section 1-5. The exhaust hole 1-3d is in communication with the gas collection chamber 1-3g. In some embodiments, the threaded sleeve 1-a is equipped with an on-off valve 1-3 to open and close the exhaust hole 1-3d.

The threaded sleeve 1-a is disposed with an external heater at outside to provide heat. The threaded rod 1-b may include: the feed section 1-5d, the compression section and the metering section 1-5a which are disposed in sequence. A polylactic-acid raw material when entering the feed section 1-5d, changes gradually from a solid material into a molten melt with an increase of a temperature step by step and under an action of shear heat between raw materials. In the compression section, the solid material is fully melted to a liquid phase by compression and shear. When a bio-based polylactic-acid raw material is heated, structures of a small portion of the raw material become unstable and undergo chemical changes, resulting in a hydrolysis. A gas generated has a serious impact on subsequent spinning. The gas is collected by the gas collection chamber 1-3g located at an end of the compression section. The gas generated by the hydrolysis is discharged from the exhaust hole 1-3d by controlling the on-off valve 1-3. When the melt enters the metering section 1-5a, the gas is removed in time, thereby overcoming the serious adverse impact of the gas from the hydrolysis on the spinning. The unfavorable situation of end breakage is eliminated, and a subsequent spinning quality and a spinning efficiency are guaranteed.

In some embodiments, as shown in FIG. 1 and FIG. 4, the threaded sleeve 1-a may include a first threaded sleeve 1-1 and a second threaded sleeve 1-4 that are butted. The threaded rod 1-b is penetrated in the first threaded sleeve 1-1 and the second threaded sleeve 1-4. The first threaded sleeve 1-1 is provided with the exhaust hole 1-3d and is mounted with the on-off valve 1-3. An inner wall of an end of the first threaded sleeve 1-1 close to the second threaded sleeve 1-4 is disposed with a recess. A sealing gasket 1-3f is provided between the first threaded sleeve 1-1 and the second threaded sleeve 1-4; and/or an inner wall of an end of the second threaded sleeve 1-4 close to the first threaded sleeve 1 is disposed with the recess, and the first threaded sleeve 1-1, the sealing gasket 1-3f, the second threaded sleeve 1-4 and the threaded rod 1-b together enclose a gas collection chamber 1-3g.

The threaded sleeve 1-a is disposed in a form of a combination of the first threaded sleeve 1-1 and the second threaded sleeve 1-4 to form the gas collection chamber 1-3g. In some embodiments, a sealing gasket 1-3f being disposed between the first threaded sleeve 1-1 and the second threaded sleeve 1-4 means that the sealing gasket 1-3f is disposed at a buttting surface of the first threaded sleeve 1-1 and the second threaded sleeve 1. The first threaded sleeve 1-1 and the second threaded sleeve 1-4 can be connected by bolts, and the sealing gasket 1-3f is used to ensure a leakproofness of the gas collection chamber 1-3g.

In some embodiments, the above-described 'and/or an inner wall of an end of the second threaded sleeve 1-4 close to the first threaded sleeve 1 being disposed with the recess' means that: based on the inner wall of the end of the first threaded sleeve 1-1 close to the second threaded sleeve 1-4 being disposed with the recess, an inner wall of an end of the second threaded sleeve 1-4 close to the first threaded sleeve 1-1 may be disposed with the recess to form a portion of the gas collection chamber 1-3g; or the inner wall of the end close to the second threaded sleeve 1-4 of the first threaded sleeve 1-1 may be disposed with the recess alone, or the inner wall of the end of the second threaded sleeve 1-4 close to the first threaded sleeve 1-1 may be disposed with the recess alone.

In some embodiments, the feed section 1-5d is configured as a single-thread threaded rod to complete a feeding; the compression section is configured as a double-thread threaded rod to reduce the shear heat of the compression section, thereby reducing an over-temperature phenomenon of the compression section.

In some embodiments, referring to FIG. 1, FIG. 7 and FIG. 8, the compression section may include a first compression section 1-5c and a second compression section 1-5b. The first compression section 1-5c and the second compression section 1-5b are configured in a form of the double-thread threaded rod. The threaded rod 1-b may include a feed section 1-5d, a first compression section 1-5c, a second compression section 1-5b and a metering section 1-5a disposed in sequence. Along a material delivering direction in the screw extruder, groove depths of the first compression section 1-5c and the second compression section 1-5b gradually decrease, and a variation of the groove depth of the second compression section 1-5b is less than that of the first compression section 1-5c.

The groove depth of the first compression section 1-5c gradually decreases, and the variation of the groove depth thereof is relatively large, so that a material in a solid phase is compressed and sheared, and fully melted to a liquid phase, and then passes through the second compression section 1-5b with a decreasing groove depth and with a small variation of the groove depth. On the one hand, the material in a solid phase is fully melted into a liquid, and on the other hand, there is a relative space to store the gas generated after hydrolysis.

In some embodiments, the above-mentioned variation of the groove depth refers to an amount of variation of the groove depth per unit length along the material delivering direction in the screw extruder. The large variation and small variation of the groove depth are relative to one another.

In some embodiments, as shown in FIG. 1, the threaded sleeve 1-a may include an electric contact pressure gauge 1-2. A measurement end of the electric contact pressure gauge 1-2 is exposed to the gas collection chamber 1-3g. The gas collection chamber 1-3g is used to collect the gas generated by the hydrolysis of the material. A pressure generated when the collected gas reaches a certain volume, is reflected on the electric contact pressure gauge 1-2, and actions of the on-off valve 1-3 are assisted by the electric contact pressure gauge 1-2.

In some embodiments, as shown in FIG. 1 and FIG. 4, the threaded sleeve 1-a may include a base seat 1-c disposed on an outer edge. The exhaust hole 1-3d is in a L-shape and disposed within the base seat 1-c. Two ends of the exhaust hole 1-3d are in communication with the gas collection chamber 1-3g and the external atmosphere respectively. The on-off valve 1-3 is mounted on the base seat 1-c. The on-off valve 1-3 may include a valve body 1-3b, a packing sealer 1-3c, a valve stem 1-3a and a bushing 1-3e. A portion of the valve body 1-3b is disposed within the base seat 1-c and another portion of the valve body 1-3b protrudes from the base seat 1-c (as shown in FIG. 4, a portion of the valve body 1-3b is disposed within the base seat 1-c, and the another portion of the valve body 1-3b is exposed from the base seat 1-c). The valve stem 1-3a is movably penetrated in the valve body 1-3b. As the valve body 1-3b partially is disposed within the base seat 1-c, so that the valve stem 1-3a is also movably penetrated in the base seat 1-c. The packing sealer 1-3c is disposed within the base seat 1-c and disposed between the base seat 1-c and the valve stem 1-3a to seal a gap area between the base seat 1-c and the valve stem 1-3a, so that the gas is fully discharged from the exhaust hole 1-3d when the gas is discharged. An end of the valve stem 1-3a is configured to be in a form of arc to close or communicate a L-shaped bend of the exhaust hole 1-3d. The bushing 1-3e is disposed at the L-shaped bend of the exhaust hole 1-3d of the base seat 1-c, and the bushing 1-3e is configured to abut against an arc surface of an end of the valve stem 1-3a to ensure a good leakproofness when the valve stem 1-3a closes the exhaust hole 1-3d.

By operating a position of the valve stem 1-3a, the exhaust hole 1-3d is blocked or communicated. In some embodiments, the gas in the gas collection chamber 1-3g is discharged by opening the exhaust hole 1-3d in conjunction with an indication of the electric contact pressure gauge 1-2.

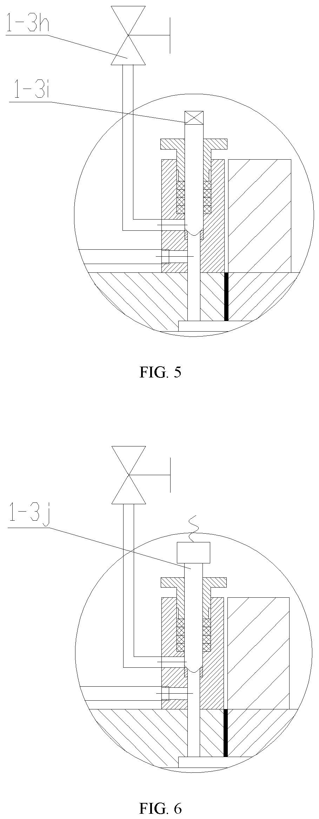

In some embodiment, as shown in FIG. 5, the on-off valve 1-3 may be configured as a manual needle valve 1-3i.

In some embodiment, as shown in FIG. 6, the on-off valve 1-3 may be configured as an electric needle valve 1-3j. At this time, the electric needle valve 1-3j may be controlled to open at a fixed value in combination with the electric contact pressure gauge 1-2.

In some embodiment, as shown in FIG. 4, an end of the exhaust hole 1-3d directly is in communication with the external atmosphere.

In some embodiment, as shown in FIG. 5 and FIG. 6, an electric vacuum pump 1-3h may be added at an end of the exhaust hole 1-3d to quickly discharge the gas through pumping. The electric vacuum pump may also be combined with the electric contact pressure gauge 1-2 to control the electric vacuum pump 1-3h to automatically start to exhaust the gas at a preset gas pressure.

In some embodiments, as shown in FIG. 2 and FIG. 3, along the material delivering direction in the screw extruder, the metering section 1-5a may sequentially include a first double-thread structure 1-5a3, a diamond shape separated structure 1-5a2 and a second double-thread structure 1-5a1. The diamond shape separated structure 1-5a2 is configured as a diamond shape formed by an integrated milling or a diamond pin formed by processing. In some embodiments, an upper row of diagrams in FIG. 3 show an integrated milled diamond shape structure, and a lower row of diagrams in FIG. 3 show a diamond shape separated structure 1-5a2 processed from diamond shape pins. The diamond shape separated structure 1-5a2 can further promote a mixing and homogenization of the melt.

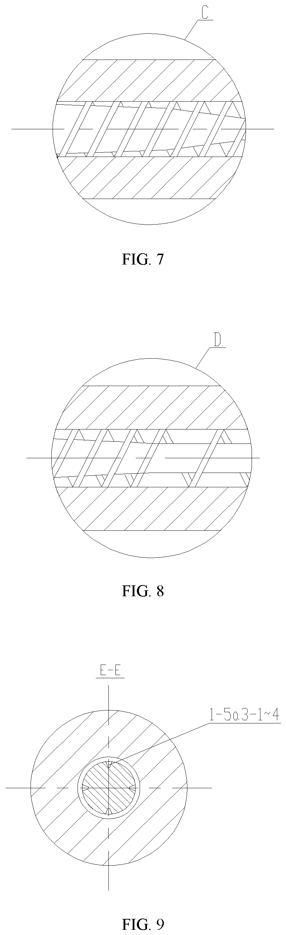

In some embodiments, as shown in FIG. 9, a portion of a threaded rod of the first double-thread structure 1-5a3 is distributed and laid with a plurality of V-shaped grooves 1-5a3-1∼4 along a spiral annular shape, and the V-shaped groove has a length extending on the entire first double-thread structure 1-5a3 to achieve an advantageous effect of reducing unevennesses of the melt about temperature and intrinsic viscosity.

In some embodiments, as shown in FIG. 2 and FIG. 3, along the material delivering direction in the screw extruder, a diameter of the diamond shape separated structure 1-5a2 gradually decreases, and a density of distribution of diamonds gradually decreases. In some embodiments, from horizontal dotted lines in FIG. 3, it is shown that the diameter of the diamond shape separated structure 1-5a2 gradually decreases to ensure that the material does not flow back and the shear heat is gradually reduced. It can be seen from cross-sectional views G3-G3, G2-G2 and G1-G1 in FIG. 3 that the number of diamonds on the view G3-G3 is greater than that on view G2-G2 and the number of diamonds on the G2-G2 is greater than that on the view G1-G1, and thus it is shown that the density of distribution of diamonds gradually decreases. The higher density at the beginning is advantageous to stir, and a subsequent lower density is advantageous to reduce the shear heat. With such design, there are no dead angles in circulation, and thus no retention of the raw materials, and no carbonization of materials, which is conducive to a continuous operation of the spinning process.

In some embodiment, a length of a single-thread feed section 1-5d is configured to be 9D to 11D; a length of a double-thread compression section is controlled to be 10D to 11D; and a length of the metering section 1-5a is configured to be 9D to 15D.

In some embodiment, a length of the first double-thread structure 1-5a3 is configured to be 4D to 10D; a length of the diamond shape separated structure 1-5a2 is configured to be 3D; and a length of the second double-thread structure 1-5a1 is configured to be 2D.

In some embodiment, an aspect ratio of the threaded rod 1-b is controlled as (28-34): 1.

In some embodiments, a temperature of the screw extruder is controlled in zones as 160°C to 240°C, and a pressure after filtration of the screw extruder is controlled as 80-120kg/cm².

In some embodiment, thread ridges of the feed section 1-5d have equal diameter and single pitch, and thread ridges of the second double-thread structure 1-5a1 have equal distance and equal height, and therefore the melt is fully melted to make the output melt uniform and stable and the pressure at the outlet of the screw extruder is sable, thereby facilitating subsequent spinning to achieve quantitative, constant-pressure and constant-temperature extrusion from a machine head in mixing and extrusion section.

A combined spinning-drawing-winding machine for industrial polylactic-acid fiber is also provided according to some embodiments of the disclosure, which includes the above-mentioned screw extruder. An extrusion head disposed at a head portion of the screw extruder is equipped with a melt pressure sensor, so that the pressure value of the melt may be detected to ensure that a pressure of the head portion of the screw extruder is constant.

The above-mentioned embodiments are preferred embodiments of the disclosure which are only used to facilitate the explanation of the disclosure and are not intended to limit the disclosure in any form. Equivalent embodiments with local changes or modifications made by any skilled in the art with common knowledge by using the technical content disclosed in the disclosure which are within the scope of the technical features mentioned in the disclosure and does not depart from the content of the technical features of the disclosure, will still fall within the scope of the technical features of the disclosure.

## Claims

1. A screw extruder, comprising a threaded sleeve and a threaded rod penetrating in the threaded sleeve; the threaded rod comprises a feed section, a compression section and a metering section which are disposed in sequence; the threaded sleeve comprises:
a gas collection chamber opened and disposed on an inner wall at a junction of the compression section and the metering section; and
an exhaust hole being in communication with the gas collection chamber;
wherein the threaded sleeve is mounted with an on-off valve to open and close the exhaust hole.

2. The screw extruder according to claim 1, wherein the threaded sleeve comprises a first threaded sleeve and a second threaded sleeve that are butted; the threaded rod is penetrated in the first threaded sleeve and the second threaded sleeve; the first threaded sleeve is provided with the exhaust hole and mounted with the on-off valve; an inner wall of an end of the first threaded sleeve close to the second threaded sleeve is disposed with a recess; a sealing gasket is provided between the first threaded sleeve and the second threaded sleeve; and/or an inner wall of an end of the second threaded sleeve close to the first threaded sleeve is disposed with the recess, and the first threaded sleeve, the sealing gasket, the second threaded sleeve and the threaded rod together enclose the gas collection chamber.

3. The screw extruder according to claim 1, wherein the feed section is configured as a single-thread threaded rod, and the compression section is configured as a double-thread threaded rod.

4. The screw extruder according to claim 3, wherein the compression section comprises a first compression section and a second compression section; the first compression section and the second compression section are configured in a form of the double-thread threaded rod; the threaded rod comprises the feed section, the first compression section, the second compression section and the metering section disposed in sequence; and
along a material delivering direction in the screw extruder, groove depths of the first compression section and the second compression section gradually decrease, and a variation of the groove depth of the second compression section is less than that of the first compression section.

5. The screw extruder according to claim 1, wherein the threaded sleeve comprises an electric contact pressure gauge, a measurement end of the electric contact pressure gauge being exposed to the gas collection chamber.

6. The screw extruder according to any one of claims 1 to 5, wherein the threaded sleeve comprises a base seat disposed on an outer edge; the exhaust hole is in a L-shape and disposed within the base seat; two ends of the exhaust hole are in communication with the gas collection chamber and the external atmosphere respectively; the on-off valve is mounted on the base seat;
the on-off valve comprises:
a valve body, a portion of which is disposed within the base seat;
a valve stem, movably penetrated in the valve body, and wherein an end of the valve stem is configured to be in a form of arc to close or communicate a L-shaped bend of the exhaust hole;
a packing sealer, disposed within the base seat and disposed between the base seat and the valve stem; and
a bushing, disposed at the L-shaped bend of the exhaust hole of the base seat and configured to abut against an arc surface of an end of the valve stem.

7. The screw extruder according to claim 6, wherein the on-off valve comprises a manual on-off valve or an automatic on-off valve;
an end of the exhaust hole is directly in communication with the external atmosphere or in communication with the external atmosphere through a vacuum pump.

8. The screw extruder according to claim 1, wherein, along the material delivering direction in the screw extruder, the metering section sequentially comprises a first double-thread structure, a diamond shape separated structure and a second double-thread structure; the diamond shape separated structure is configured as a diamond shape formed by an integrated milling or a diamond pin formed by processing.

9. The screw extruder according to claim 8, wherein along the material delivering direction in the screw extruder, a diameter of the diamond shape separated structure gradually decreases, and a density of distribution of diamonds gradually decreases; and
a portion of a threaded rod of the first double-thread structure is distributed and laid with a plurality of V-shaped grooves.

10. A combined spinning-drawing-winding machine for industrial polylactic-acid fiber, comprising the screw extruder according to any one of claims 1 to 9, an extrusion head disposed at a head portion of the screw extruder being disposed with a melt pressure sensor.
